# EUROPÄISCHE PATENTANMELDUNG

(11) **EP 1 393 937 A2**
(43) Veröffentlichungstag der Anmeldung: **03.03.2004**
(21) Anmeldenummer: 03018836.1
(22) Anmeldetag: 19.08.2003
(51) Int. Cl.: B60G 15/06

(54) **Optimierung der Federkennlinie einer Federdämpfereinheit für eine Kraftfahrzeug-Radaufhängung**

(30) Priorität: 23.08.2002 DE 10238788
(71) Anmelder: Lehmann, Bernhard, Dr., 71063 Sindelfingen (DE)
(72) Erfinder: Lehmann, Bernhard, Dr., 71063 Sindelfingen (DE)
(74) Vertreter: Lieck, Hans-Peter, Dipl.-Ing.

(57) **Zusammenfassung**

Bei einem Verfahren zur Optimierung der Federkennlinie einer Federdämpfereinheit (1) für eine Kraftfahrzeug-Radaufhängung wird bei einer in einer Fahrzeugachse (2) eingebauten Federdämpfereinheit (1) die auf ein Kolbenstangenführungselement wirkende Querkraft F_{Q} und der zugehörige Dämpfereinschubweg S_{D} gemessen und die entsprechende F_{Q}/S_{D}-Federkennlinie_{Einbau,ist} erstellt. Dann wird die F_{Q}/S_{D}-Federkennlinie_{Prüf,ist} der Tragfeder (9) der Federdämpfereinheit (1) in einer Federprüfmaschine (18) gemessen, wobei der Winkel der Tragfederachse zur Prüfmaschinenachse (19) dem Winkel der Tragfederachse zur Kolbenstangenachse in Einbaulage entspricht. Durch Überlagerung der beiden F_{Q}/S_{D}-Federkennlinien wird eine neue F_{Q}/S_{D}-Federkennlinie_{Prüf,soll} für die Tragfeder (9) bestimmt. Ferner wird ein Meßglied (14) zur Messung der auf das Kolbenstangenführungselement wirkende Querkraft F_{Q} vorgeschlagen.

## Beschreibung

Die Erfindung bezieht sich auf ein Verfahren zur Optimierung der Federkennlinie einer Federdämpfereinheit für eine Kraftfahrzeug-Radaufhängung, wobei die Federdämpfereinheit eine Tragfeder und einen diese durchlaufenden Teleskop-Stoßdämpfer aufweist und letzterer seinerseits ein Dämpferrohr, dessen erstes Ende mit dem Rad verbindbar ist, einen in dem Dämpferrohr hin- und herbewegbaren Dämpferkolben sowie eine Kolbenstange aufweist, deren erstes Ende am Dämpferkolben befestigt ist und die im Dämpferrohr durch ein Kolbenstangenführungselement geführt ist, sich aus dem zweiten Ende des Dämpferrohrs heraus erstreckt und die an ihrem zweiten Ende mit dem Fahrzeugaufbau gelenkig verbindbar ist, wobei ein Ende der Tragfeder am Dämpferrohr und deren anderes Ende nahe dem zweiten Ende der Kolbenstange unverschieblich befestigt ist. Die Federdämpfereinheit kann radführend, dann im allgemeinen als Federdämpferbein bezeichnet, oder nichtradführend sein.

Die Erfindung bezieht sich auch auf ein Meßglied zur Messung der in einer Zylinderkolbeneinheit, insbesondere in einem Teleskop-Stoßdämpfer, vorhandenen Querkraft, wobei die Zylinderkolbeneinheit ein Zylinderrohr, einen in dem Zylinderrohr hin- und herbewegbaren Kolben und eine Kolbenstange aufweist, die an dem Kolben befestigt ist und sich in Längsrichtung des Zylinderrohrs erstreckt.

Zur Erzielung eines guten Fahrkomforts bei Kraftfahrzeugen ist idealerweise ein Fahrwerk ohne mechanische Reibung in seinen Lagerstellen, Gelenken, Führungen usw. erforderlich. Werden in den Achsen oder Halbachsen die oben beschriebenen Federdämpfereinheiten, beispielsweise McPherson-Federdämpferelemente, eingesetzt, ist es zur Optimierung des Fahrkomforts erforderlich, die mechanische Reibung in den Federdämpfereinheiten über den gesamten Betriebsbereich zu minimieren bzw. idealerweise zu Null zu bringen. Dies wird erreicht, wenn die auf die Kolbenstangenführungs-, Kolbenstangendichtungs- und Kolbendichtungssysteme wirkenden Querkräfte minimal bzw. idealerweise Null sind. Am Dämpfer wird daher zur Komfortabstimmung des Federdämpfersystems idealerweise und in der praktischen Umsetzung näherungsweise neben der Federsteifigkeit nur Fluidreibung zur Dämpfung eingesetzt. Zur Auslegung der Achsen bzw. Halbachsen und ihrer Elemente und Bauteile werden CAT-Methoden eingesetzt. Deren Güte ist abhängig von der Realitätsnähe der für die Rechnung angesetzten Randbedingungen und dem Detaillierungsgrad der Abbildung der betrachteten Strukturen, vor allem der Kennwerte und der Bauteilgeometrie. Insbesondere bei McPherson-Federdämpferbeinen treffen kompliziert abzubildende Elemente wie Gummiteile (z. B. Kopflager, Kolbendichtungen, Achslager) und Blech- und Schmiedeteile (z. B. Federteller, Dämpferrohr, Achsschenkel) sowie Tragfedern zusammen. Daher sind zur endgültigen Festlegung bei Konstruktion und Bau von McPherson-Federdämpferelementen Versuche zur Auslegungsabsicherung und Verifizierung der Rechenmodelle notwendig. Diese Versuche sind Grundlage für eine abgesicherte Funktionsweise bei Serienfertigung innerhalb vorgegebener Toleranzlagen und bei vertretbaren Kosten.

Es ist bekannt, zur Minimierung der auf die Kolbenstangenführung wirkenden Querkraft die Tragfeder geneigt zur Achse der Federdämpfereinheit, d. h. geneigt zur Achse des Dämpferrohrs und der Kolbenstange, anzuordnen. Ferner ist es bekannt, in Federprüfmaschinen die Tragfedern zu prüfen und deren Federkennlinien zu ermitteln, wie es beispielsweise in den Aufsätzen von Wünsche, T./Muhr, K.-H./Biecker, K./Schnaubelt, L.: Side Load Springs as a Solution to Minimize Adverse Side Loads Acting on the McPherson Strut, 940862, SAE SP-1031, S. 11 - 16, Niepage, P./Müller, H.: Ein hybrides Verfahren zur Untersuchung beliebig beanspruchter Schraubendruckfedern ohne Windungsberührung, Draht 37 (1986) 8, S. 457 - 461, und Hastey J.P./Baudelet, J./Gerard, E./Jones, C./Viel C.: Optimization on MacPherson Suspensions with a Spring, 970100, Allevard Ressorts, 1997, S. 119-124 beschrieben wird.

Der erste Aufsatz befaßt sich mit der Optimierung der Reibung in McPherson-Federdämpferbeinen durch Federn, die eine Kraftkomponente besitzen, welche die Verklemmkräfte an McPherson-Federdämpferbeinen kompensieren.

Im zweiten Aufsatz wird eine Vorrichtung zur dreidimensionalen Messung von Kräften und Momenten unten an einer Feder in einer Federprüfmaschine beschrieben.

Im dritten Aufsatz wird berichtet über das Einstellen der Querkräfte am McPherson-Federdämpferbein so, daß die Reibung bei Bewegung in Ein- und Ausfederungsrichtung ohne und mit Tragfeder gleich ist.

Die Ergebnisse und die Effektivität der dort beschriebenen Verfahren zur Festlegung von Federkennlinien von Tragfedern sind jedoch noch nicht zufriedenstellend.

Die Aufgabe der vorliegenden Erfindung liegt daher darin, ein verbessertes Verfahren zur Optimierung der Federkennlinie einer Federdämpfereinheit für eine Kraftfahrzeug-Radaufhängung vorzuschlagen. Zudem soll ein Meßglied für ein solches Verfahren vorgeschlagen werden.

Erfindungsgemäß wird diese Aufgabe hinsichtlich des Verfahrens durch die Merkmale des Anspruchs 1 gelöst.

In Bezug auf das Meßglied wird die Aufgabe erfindungsgemäß durch die kennzeichnenden Merkmale des Anspruchs 9 gelöst.

Durch das erfindungsgemäße Verfahren können die Federkennlinien von Federdämpfereinheiten mit relativ wenigen Schritten zielgenau optimiert werden. Der bisher erforderliche Zeit- und Arbeitsaufwand wird deutlich verringert. Dadurch, daß sowohl in einer realitätsnahen Einbausituation in einer Fahrzeugachse, z. B. Prototyp oder Serienteil, an der gesamten Federdämpfereinheit als auch in einer Federprüfmaschine nur an der Tragfeder Querkräfte in Abhängigkeit vom Einfederungsweg gemessen werden, wobei in der Federprüfmaschine die Achse der Tragfeder zur Prüfmaschinenachse in demselben Winkel geneigt ist wie in der Einbaulage in der Federdämpfereinheit zur Kolbenstangenachse, können die jeweiligen gemessenen Querkraft-(F_{Q})/Federweg-(s_{D})-Feder-kennlinien überlagert werden, um eine Soll-Federkennlinie für die Tragfeder zu ermitteln. Mit der Messung der auf das Kolbenstangenführungselement wirkenden Querkraft in der Fahrzeugachse werden die Einflüsse sämtlicher Elemente und Bauteile der Radaufhängung realtitätsnah miterfaßt, so daß die im alltäglichen Betrieb auftretende Querkraft weitgehend bekannt ist. Die Größe dieser Querkraft kann durch die Lage und Ausbildung der Tragfeder wesentlich beeinflußt werden. Durch die in der Federprüfmaschine ermittelte vorhandene Federkennlinie bzw. Querkraft der Tragfeder wird deutlich, wie diese verändert werden muß, um eine gewünschte, auf das Kolbenstangenführungselement wirkende Querkraft im in einer Fahrzeugachse eingebauten Zustand zu erhalten. Somit wird es möglich, eine gewünschte neue Federkennlinie für die Tragfeder festzulegen und eine neue Tragfeder mit dieser neuen Federkennlinie herzustellen, die bereits sehr nahe am oder auch schon im optimalen Bereich liegen. Die Ermittlung der F_{Q/}s_{D}-Federkennlinie im in einer Fahrzeugachse eingebauten Zustand und die Überlagung dieser F_{Q}/s_{D}-Federkennlinie mit der in einer Federprüfmaschine ermittelten F_{Q}/s_{D}-Federkennlinie für die Tragfeder, wobei der Winkel der Achse der Tragfeder zur Prüfmaschinenachse der Einbaulage in der Federdämpfereinheit zur Kolbenstangenachse entspricht, reduziert die Anzahl der notwendigen Entwicklungsschritte zur Optimierung der Federkennlinie einer Federdämpfereinheit beträchtlich.

Vorzugsweise wird das Kolbenstangenführungselement nahe dem zweiten Ende des Dämpferrohrs angeordnet. Hierdurch wird die auf das Kolbenstangenführungselement wirkende Querkraft im mittleren Bereich der Längserstreckung der Kolbenstange gemessen. So wird weitestgehend sichergestellt, daß der Querkraftverlauf über die gesamte Kolbenstange einem gewünschten Querkraftverlauf entspricht.

In bevorzugter Weiterbildung der Erfindung wird die Tragfeder in der Federprüfmaschine so angeordnet, daß die Lage der Prüfmaschinenachse in Bezug auf die Tragfeder der Lage der Kolbenstangenachse entspricht. Hierdurch wird die Auswertung der Meßergebnisse vereinfacht, da Umrechnungen der Meßwerte nicht notwendig sind oder aber der Aufwand hierfür zumindest verringert wird.

In vorteilhafter Ausgestaltung der Erfindung umfaßt das Ermitteln der Querkraft F_{Q,Prüf,ist} das Ermitteln der Lage, der Richtung und des Betrags des resultierenden Kraft- und Momentenvektors der Tragfeder. Die Ermittlung der Querkraft F_{Q,Prüf,ist} wird hierdurch weiter vereinfacht.

Dabei wird vorzugsweise der resultierende Kraft- und Momentenvektor durch Messungen an einem der Enden oder an beiden Enden der Tragfeder ermittelt. Mit diesen Maßnahmen wird der Meßaufwand relativ gering gehalten.

In einer bevorzugten Ausführungsform der Erfindung wird die F_{Q}/s_{D}-Federlinie_{Prüf,soll} bestimmt, indem bei einem ausgewählten Wert s_{D} die Differenz zwischen dem Wert F_{Q,Einbau,ist} und einem gewünschten Wert F_{Q,Einbau,soll} ermittelt und zu dem Wert F_{Q,Prüf,ist} addiert wird. Auf diese Weise wird die F_{Q/}s_{D}-Federkennlinie_{Prüf,soll} relativ einfach bestimmt, da ihr die Querkraftdifferenz an lediglich einem bestimmten Wert s_{D} zugrunde gelegt wird.

Gemäß einer weiteren, ebenfalls bevorzugten Ausführungsform der Erfindung wird die F_{Q/}s_{D}-Federkennlinie_{Prüf, soll} bestimmt, indem die F_{Q}/s_{D}-Federkennlinie_{Einbau, ist} in einem vorgegebenen s_{D}-Bereich linearisiert wird und die Differenz zu einer vorgegebenen linearen F_{Q/}s_{D}-Federkennlinie_{Einbau, soll} in diesem s_{D}-Bereich gebildet und zu der F_{Q/}s_{D}-Federkennlinie_{Prüf, ist} addiert wird. Bei dieser Vorgehensweise wird der F_{Q/}s_{D}-Federkennlinie_{Prüf, soll} ein relativ großer s_{D}-Bereich zugrunde gelegt.

In vorteilhafter Weiterbildung der Erfindung wird die F_{Q}/s_{D}-Federkennlinie_{Prüf,soll} so bestimmt, daß F_{Q,Einbau,ist} minimiert wird. Durch die Minimierung der Querkräfte werden die Reibungskräfte im Kolbenstangenführungselement, am Kolben und am Kopflager minimiert, so daß der Fahrkomfort deutlich erhöht wird.

Mit dem erfindungsgemäß vorgeschlagenen Meßglied kann die auf das Kolbenstangenführungselement wirkende Querkraft mit relativ einfachen Mitteln sehr genau gemessen werden. Das Meßglied wird anstelle des eigentlichen Kolbenstangenführungselements in dem Zylinderrohr bzw. Dämpferrohr befestigt und liegt mit seiner Innenfläche bzw. -wandung an der Außenfläche der Kolbenstange an, die sich längs der Innenwandung gleitend hin- und herbewegt. Die Querkräfte werden somit dort gemessen, wo sie im praktischen Betrieb der Radaufhängung auch auftreten. Da die Abschnitte der Außenwandung des Meßgliedes, auf denen die Meßelemente zur Messung der Querkraft angeordnet sind, mit Abstand zur Innenwandung des Zylinder- bzw. Dämpferrohrs angeordnet sind, werden die Querkräfte relativ störungsfrei gemessen. Somit wird eine äußerst realitätsnahe Messung der Querkräfte erreicht.

Vorteilhafterweise sind die Meßelemente Dehnungsmeßstreifen. Dehnungsmeßstreifen benötigen sehr wenig Platz und liefern äußerst genaue Meßwerte.

Vorzugsweise ist auf der Innenwandung des Rohrabschnitts Gleitmaterial angebracht. Ein möglichst störungsfreies Gleiten der Kolbenstange längs der Innenwandung des Meßgliedes wird dadurch erreicht.

In einer bevorzugten Weiterbildung der Erfindung weist der Rohrabschnitt zwischen seiner Innenwandung und seiner Außenwandung einen in Umfangsrichtung vollständig umlaufenden Schlitz auf, der sich in Längsrichtung von einem Ende des Rohrabschnitts aus über die Meßelemente hinaus bis zu einem vorgegebenen Abstand vom anderen Ende des Rohrabschnitts erstreckt. Mit diesen Maßnahmen wird eine von Störgrößen weitestgehend freie Messung der Querkräfte erreicht, da der Wandabschnitt, auf dem die Meßelemente aufgebracht sind, weder mit der Kolbenstange noch mit dem Zylinder- bzw. Dämpferrohr direkt in Berührung kommt. Ferner sind die die Meßelemente tragenden Wandabschnitte infolge des Schlitzes relativ dünn ausgebildet, so daß die Beanspruchungen relativ große Verformungen hervorrufen und daher die Meßempfindlichkeit bzw. -genauigkeit erhöht wird.

Bevorzugt ist der Rohrabschnitt mit einem Befestigungselement am Zylinderrohr befestigt, wobei das Befestigungselement sich von einem Ende des Rohrabschnitts aus erstreckt. Hierdurch wird der Bereich des Meßgliedes, in dem die Meßelemente angeordnet sind, frei von Störungen gehalten, die im Bereich der Krafteinleitung des Befestigungselements zwangsläufig auftreten.

In einer günstigen Ausgestaltung der Erfindung weist das Meßglied je Meßrichtung zwei Meßelemente auf, die am Umfang versetzt zueinander angeordnet sind. Hierdurch wird eine redundante Messung der Querkraft und ein Herausrechnen eines Momentenanteils möglich.

Vorteilhafterweise weist das Meßglied einen Außenring, der im Zylinderrohr koaxial zur Zylinderachse befestigbar ist, einen Innenring, der zum Außenring konzentrisch angeordnet und zur gleitenden Anlage an die Kolbenstange ausgebildet ist, sowie einen dünnwandigen zylindrischen Wandabschnitt auf, der in Längsrichtung des Zylinderrohrs zwischen Außenring und Innenring angeordnet ist und diese miteinander verbindet und auf dessen radialer Außenwandung die Meßelemente angebracht sind. Mit einem solchermaßen ausgebildeten Meßglied werden die auftretenden Querkräfte äußerst präzise gemessen, wobei Störungsrungseinflüsse durch Lasteinleitungen am Außenring und durch eine Dickwandigkeit des an der Kolbenstange anliegenden Gleitmaterials und Wandabschnitts vermieden werden.

Die Erfindung wird nachfolgend anhand der Zeichnungen beispielshalber noch näher erläutert. Es zeigen:
- Figur 1: in schematischer Darstellung eine Querschnittsansicht durch ein McPherson-Federdämpferbein im in eine Halbachse eingebauten Zustand;

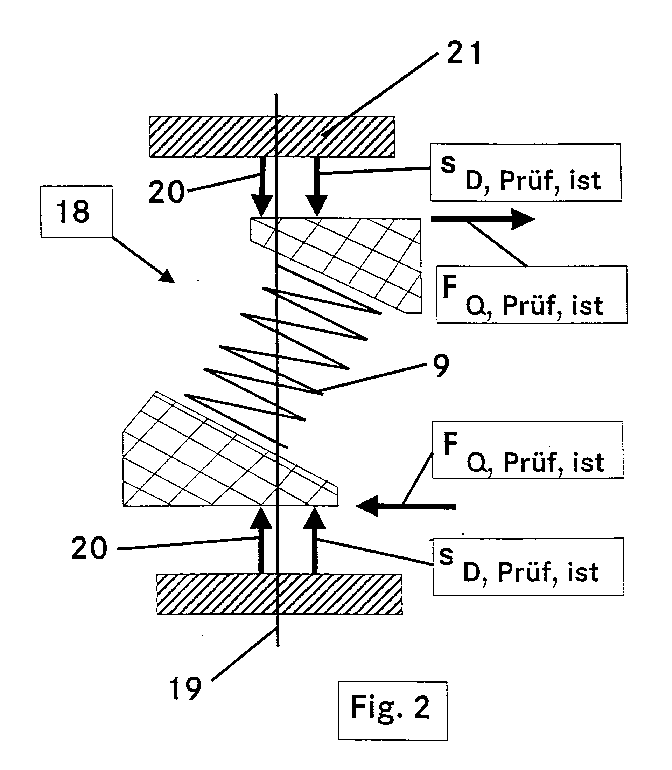

- Figur 2: in schematischer Darstellung die Tragfeder aus Figur 1, eingebaut in eine Federprüfmaschine;
- Figur 3: ein Diagramm mit F_{Q/}S_{D}- und F_{Q}/F_{D}-Federkennlinien und - Achskennlinien;
- Figur 4: eine teilweise geschnittene Seitenansicht eines erfindungsgemäßen Meßgliedes;
- Figur 5: eine Draufsicht auf das Meßglied aus Figur 4;
- Figur 6: Schaltbilder der Meßelemente aus Figur 5; und
- Figur 7: das Meßglied aus Figur 4 und 5 im in ein Dämpferrohr eingebauten Zustand.

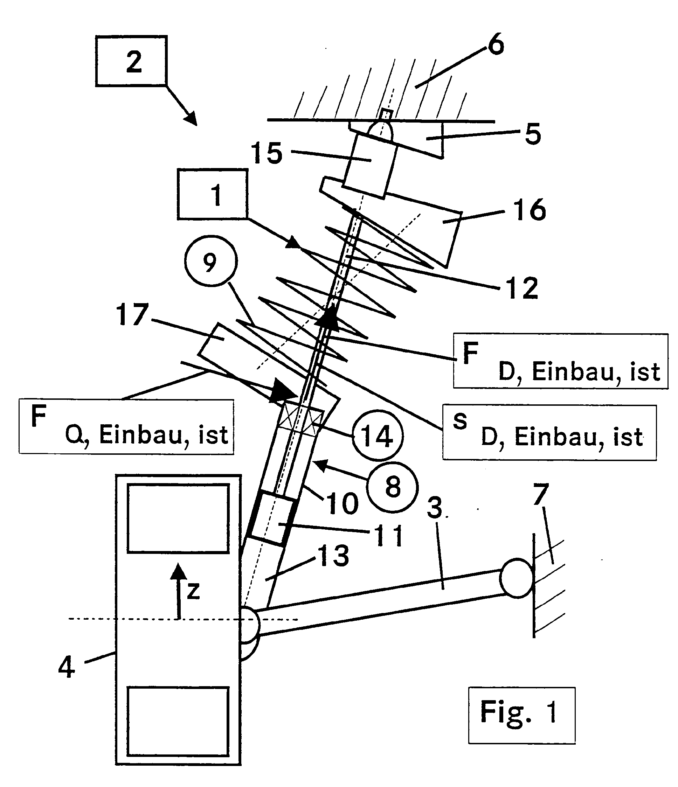

Als Ausführungsbeispiel wird die Optimierung eines McPherson-Federdämpferbeins 1 beschrieben. In Figur 1 ist schematisch eine Fahrzeughalbachse 2 mit einem McPherson-Federdämpferbein 1, einem Führungslenker 3 und einem Rad 4 sowie eine ortsfeste Lagerstelle 5 im Fahrzeugblech bzw. Fahrzeugaufbau 6 und eine ortsfeste Anlenkungsstelle 7 für den Führungslenker 3 dargestellt.

Das McPherson-Federdämpferbein 1 weist einen Teleskop-Stoßdämpfer 8 und eine Tragfeder 9 auf, deren Achse zur Längsachse des Teleskop-Stoßdämpfers 8 geneigt ist.

Diese Neigung dient der Querkraftkompensation durch die Tragfeder 9 in der mit Radlast beaufschlagten Federdämpfereinheit, im dargestellten Ausführungsbeispiel des McPherson-Federdämpferbeins 1.

Die vorliegende Erfindung kann aber auch zur Optimierung von nicht radführenden Federdämpfereinheiten eingesetzt werden.

Der Teleskop-Stoßdämpfer 8 ist aus einem Dämpferrohr 10, einem in dem Dämpferrohr 10 hin- und herbewegbaren Dämpferkolben 11 sowie einer Kolbenstange 12 gebildet, die mit einem ersten Ende am Dämpferkolben 11 befestigt ist und deren zweites Ende aus dem Dämpferrohr 10 in Richtung Fahrzeugaufbau 6 herausragt und die Tragfeder 9 durchläuft.

Das Dämpferrohr 10 ist zylindrisch ausgebildet und weist ein erstes, geschlossenes Ende auf, das über einen Achsschenkel 13 mit einem Achszapfen starr verbunden ist, um den das Rad 4 reibungsmindernd gelagert umläuft. Über eine hier nicht dargestellte gelenkig am Achsschenkel angebundene Stange wird beispielsweise der Spurwinkel für Geradeausfahrt eingestellt. Das zweite Ende des Dämpferrohrs 10 ist offen ausgebildet und dem Fahrzeugaufbau 6 zugewandt. Das Dämpferrohr 10 und die Kolbenstange 12 verlaufen zu dem Rad 4 unter einem durch die Fahrwerkgeometrie vorgegebenen Winkel. Am bzw. im freien Ende des Dämpferrohrs 10 ist ein als Kolbenstangenführungselement ausgebildetes Meßglied 14 eingesetzt und befestigt, das von der Kolbenstange 12 durchlaufen wird. Das Meßglied 14 wird weiter unten näher beschrieben.

Die Kolbenstange 12 durchläuft mit ihrem zweiten Ende ein Kopflager 15, das in der Lagerstelle 5 im Fahrzeugaufbau bzw. Fahrzeugblech 6 gelagert ist. Das Kopflager 15 ist in der Lagerstelle 5 gelenkig gelagert, so daß das McPherson-Federdämpferbein 1 in dieser Lagerstelle 5 verschwenkbar gelagert ist. Das zweite Ende der Kolbenstange 12 durchläuft im dargestellten Beispiel auch die Lagerstelle 5.

Im dargestellten Ausführungsbeispiel ist die Tragfeder 9 als Schraubenfeder ausgebildet, die zwischen einem oberen Federteller 16 und einem unteren Federteller 17 angeordnet ist. Der obere Federteller 16 ist beispielsweise über ein Kugellager am Kopflager 15 und der untere Federteller 17 ist beispielsweise starr am Dämpferrohr 10 nahe dessen zweiten Endes befestigt. Die Achse der Schraubenfeder 9 ist zur Kolbenstange 12 um einen konstruktiv vorgebbaren Winkel geneigt.

Das obere Ende der Tragfeder 9 kann z. B. auch an der Kolbenstange 12 oder an der Kolbenstangenlagerstelle 5 unverschieblich befestigt sein.

Die Tragfeder 9 kann beispielsweise auch als Luftfeder oder Hydrofeder ausgebildet sein.

Der Führungslenker 3 ist sowohl am Achsschenkel 13 als auch an der ortsfesten Anlenkungsstelle 7 gelenkig befestigt.

Die Lagerstelle 5 für das Kopflager 15 im Fahrzeugblech 6 sowie die Anlenkungsstelle 7 für den Führungslenker 3 sind in Bezug auf das McPherson-Federdämpferbein 1 Fixpunkte ohne nennenswerten Einfluß auf die Einfederung des Rades 4 und können daher zur Ermittlung der Federkennlinie durch die Versuchsanordnung simuliert werden, d. h. ohne Bauteile aus dem realen Fahrzeugaufbau oder der realen Fahrzeugachse.

Mit der in Figur 1 dargestellten Halbachse 2 werden die im realen Betrieb an dem Kolbenstangenführungselement auftretenden Querkräfte F_{Q,Einbau,ist} und die zugehörigen Dämpfereinschubwege s_{D,Einbau,ist} realitätsnah ermittelt. Dazu wird das Rad 4 in vertikaler Richtung z eingefedert und ausgefedert, d. h. in bzw. entgegen der Richtung des in Figur 1 dargestellten Pfeils bewegt. Während der Einfederung und Ausfederung des Rades 4 werden mit dem Meßglied 14 die auftretenden Querkräfte F_{Q,Einbau,ist} an der Kolbenstange 12, d. h. die von der Kolbenstange 12 auf das Meßglied 14 aufgebrachten Querkräfte, gemessen. Mittels geeigneter (nicht dargestellter) Wegaufnehmer wird der zugehörige Dämpfereinschubweg s_{D,Einbau,ist} gemessen, i.e. die relative Verschiebung zwischen Kolbenstange 12 und Dämpferrohr 10. Aus den gemessenen Werten F_{Q,Einbau,ist} und s_{D,Einbau,ist} wird die F_{Q/}s_{D}-Federkennlinie_{Einbau,ist} ermittelt.

Bei dieser Versuchsführung kann die Radaufstandskraft und die Tragkraft unter dem Kopflager zusätzlich gemessen und daraus die in Kolbenstangenrichtung wirkende Kraft F_{D} ermittelt werden. F_{D} setzt sich aus der in Achsrichtung der Tragfeder 9 wirkenden Federkraft und der zwischen Dämpferkolben 11 und Dämpferrohr 10 wirkenden Reibungskraft zusammen, wobei letzterer Anteil im Verhältnis zur Größe der Federkraft vernachlässigbar klein ist. Bedarfsweise müssen weitere Kräfte am Dämpfer, wie beispielsweise Gaskraft des Dämpfers, Zuganschlagfeder, Druckanschlagfeder, Gummipuffer usw., mit in die Betrachtung einbezogen werden. Das erfindungsgemäße Verfahren kann daher nicht nur mittels Messung des Federweges bzw. Dämpfereinschubweges s_{D} realisiert werden, sondern statt dessen auch mittels Messung der zugehörigen Federkraft, die bei der Versuchsdurchführung und in der Praxis im wesentlichen der Kraft F_{D} parallel zur Kolbenstange entspricht. Hier wird im Weiteren s_{D} zur Erläuterung des erfindungsgemäßen Verfahrens verwendet; dabei kann F_{D} ersatzweise und/oder zur Plausibilitätskontrolle herangezogen werden.

Mit Kenntnis der Dämpfergeometrien lassen sich - aus den Messungen der Querkräfte auf das Meßglied 14 oben am Dämpferrohr 10 - die Querkräfte auf die Dicht- und Führungselemente am Dämpferkolben 11 sowie die Gegenhaltekraft zwischen oberem, zweiten Kolbenstangenende und Kopflager 15 bestimmen.

Wenn die ermittelte F_{Q/}s_{D}-Federkennlinie_{Einbau,ist} von einer F_{Q}/s_{D}Federkennlinie_{Einbau,soll} um ein vorgegebenes Maß abweicht, i.e. ein vorgegebenes Toleranzmaß überschreitet, wird die Tragfeder aus dem McPherson-Federdämpferbein 1 ausgebaut und in einer Federprüfmaschine 18 separat gemessen.

Dabei wird die Tragfeder 9 in der Federprüfmaschine 18 so angeordnet, daß die Achse der Tragfeder 9 zur Prüfmaschinenachse 19 in demselben Winkel geneigt ist wie in der Einbaulage im Federdämpferbein 1 zur Kolbenstangenachse. Der Weg s_{D} des Dämpferkolbens 11 ist somit gleich dem Hubweg in der Federprüfmaschine. Die horizontale Lage der Achse 19 der Federprüfmaschine 18 entspricht im dargestellten Beispiel auch der horizontalen Lage der Achse der Kolbenstange 12 bzw. des Dämpferrohrs 10 des Federdämpferbeins 1. Die Tragfeder 9 wird in der Prüfmaschine 18 in Richtung der Prüfmaschinenachse 19 zusammengedrückt, wobei mit geeigneten Meßeinrichtungen an den Enden der Tragfeder 9 die Lage, die Richtung und der Betrag des resultierenden Kraft- und Momentenvektors 20 dieser Tragfeder 9 ermittelt wird. Je nach Aufbau der Meßeinrichtung kann die Berücksichtigung von Übersetzungsverhältnissen notwendig sein. Aus diesem resultierenden Kraft- und Momentenvektor 20 wiederum wird die an den Enden der Tragfeder 9 senkrecht zur Prüfmaschinenachse 19 auftretende Querkraft F_{Q,Prüf,ist} ermittelt. Hieraus und aus der gemessenen Verschiebung s_{D,Prüf,ist} der Fahrtraverse 21 der Federprüfmaschine 18, d. h. des Federweges der Tragfeder 9 in Richtung der Prüfmaschinenachse 19, wird eine F_{Q/}s_{D}-Federkennlinie_{Prüf,ist} erstellt, deren Verlauf zumindest im komfortrelevanten Federungsungsbereich der Achse im wesentlichen linear ist.

Je nachdem, welche Querkraft im Einbauzustand in einer Fahrzeugachse 2 gewünscht ist, wird nun aus der Überlagerung der F_{Q/}s_{D}-Federkennlinie_{Einbau,ist} mit der F_{Q}/s_{D}-Federkennlinie_{Prüf,ist} eine neue F_{Q/}s_{D}-Federkennlinie_{Prüf,soll} bestimmt.

Im vorliegenden Fall sollen zur Minimierung der Reibungskräfte im Federdämpferbein 1 die an die Kolbenstange 12 angreifenden Querkräfte minimiert, d. h. möglichst zu Null gebracht werden.

Idealerweise sollte in allen Einfederungslagen des Fahrzeugs die Querkraft auf die Kolbenführung Null sein. Ist dies nicht der Fall, sind Fahrdynamik und Fahrkomfort beeinträchtigt, z. B. Geradeauslauf, Lenkungsrückstellung. Da dieser Idealzustand nicht oder nur mit äußerst hohem Aufwand erreicht werden kann, wird in der Praxis die Konstruktion so ausgelegt, daß im Hauptfederungsbereich der Achse die Querkraft auf die Kolbenstangenführung des Teleskop-Stoßdämpfers 8 minimal ist.

In dem überwiegenden Arbeitsbereich der Tragfeder 9 wird die F_{Q}/s_{D}-Federkennlinie_{Einbau, ist} linearisiert und die Differenz zur linearen F_{Q}/s_{D}-Federkennlinie_{Prüf, ist} ermittelt. Zur Ermittlung einer neuen gewünschten F_{Q/}s_{D}-Federkennlinie_{Prüf, soll} für die Tragfeder 9 wird diese Differenz zu der in der Federprüfmaschine gemessenen F_{Q/}s_{D}-Federkennlinie_{Prüf, ist} addiert.

Es könnte auch bei einem einzelnen ausgewählten Dämpferweg bzw. Hubweg die Querkraftdifferenz gebildet und daraus durch Addition zur F_{Q}/s_{D}-Federkennlinie_{Prüf,ist} eine neue gewünschte F_{Q}/s_{D}-Federkennlinie_{Prüf,soll} ermittelt werden.

Wenn die neue gewünschte F_{Q}/s_{D}-Federkennlinie_{Prüf,soll} bekannt ist, wird eine Tragfeder 9 mit dieser neuen Federkennlinie hergestellt, in das Federdämpferbein 1 eingebaut und dieses wiederum in die Fahrzeugachse 2 eingebaut. Dann wird mit der neuen Tragfeder 9 - wie oben beschrieben - wieder eine F_{Q/}s_{D}-Federkennlinie_{Einbau, ist} ermittelt, wobei nun eine ermittelte Differenz zwischen der neuen F_{Q/}s_{D}-Federkennlinie_{Einbau, ist} und der vorgegebenen F_{Q}/s_{D}-Federkennlinie_{Einbau,soll} deutlich verringert ist und möglicherweise bereits im zulässigen Toleranzbereich liegt. In letzterem Fall ist die Optimierung der Federkennlinie der Tragfeder 9 abgeschlossen. Andernfalls muß der oben beschriebene Vorgang noch einmal durchlaufen werden.

Dem erfindungsgemäßen Verfahren liegt die Erkenntnis zugrunde, daß die F_{Q/}s_{D}-Federkennlinie_{Einbau,ist} zum einen von der Tragfeder 9 abhängt und zum anderen von einer Vielzahl von Parametern, zu denen u.a. auch der Teleskop-Stoßdämpfer gehört, die aber weder theoretisch noch experimentell einzeln erfaßbar sind. Mit relativ geringem Aufwand ist jedoch die F_{Q}/s_{D}-Federkennlinie der Tragfeder 9 einzeln erfaßbar. Aus diesem Grund werden erfindungsgemäß die F_{Q}/s_{D}-Federkennlinie des Gesamtsystems - wie in Figur 1 dargestellt - gemessen und die F_{Q}/s_{D}-Federkennlinie der Tragfeder 9 gemessen und modifiziert, um die F_{Q}/s_{D}-Federkennlinie des Gesamtsystems zu modifizieren.

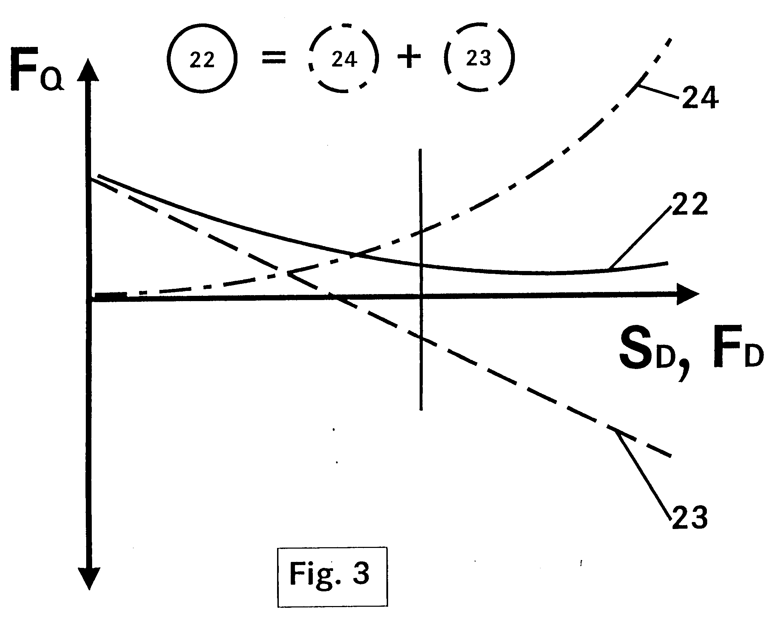

In Figur 3 sind die einzelnen Anteile der F_{Q}/s_{D}-Federkennlinie dargestellt. Die durchgezogene Linie stellt die resultierende F_{Q}/s_{D}-Federkennlinie 22 des Gesamtsystems, d. h. der gesamten Radaufhängung gemäß Figur 1, dar. Diese setzt sich zusammen aus der gestrichelt dargestellten F_{Q}/s_{D}-Federkennlinie 23 der Tragfeder 9, die in der Federprüfmaschine 18 ermittelt wird, und aus der weder theoretisch noch experimentell mit vernünftigem Aufwand ermittelbaren F_{Q/}s_{D}-Federkennlinie 24 für den Rest des Gesamtsystems, deren zeitlicher Verlauf in Figur 3 strichpunktiert dargestellt ist. Diese Darstellung gilt auch, wenn anstelle des Weges S_{D} der Kolbenstange die Kraft F_{D} entlang der Richtung der Kolbenstange verwendet wird.

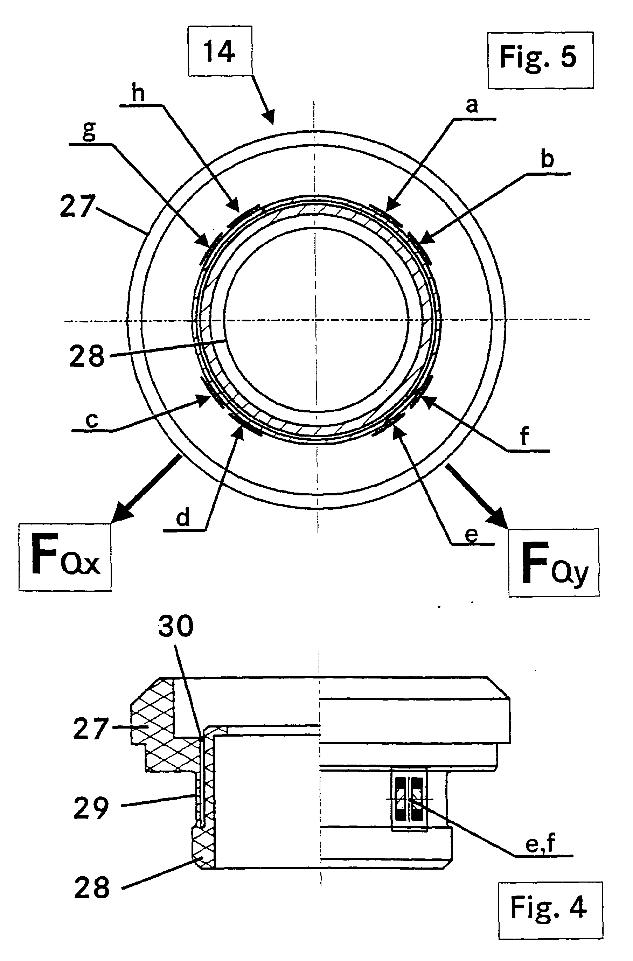

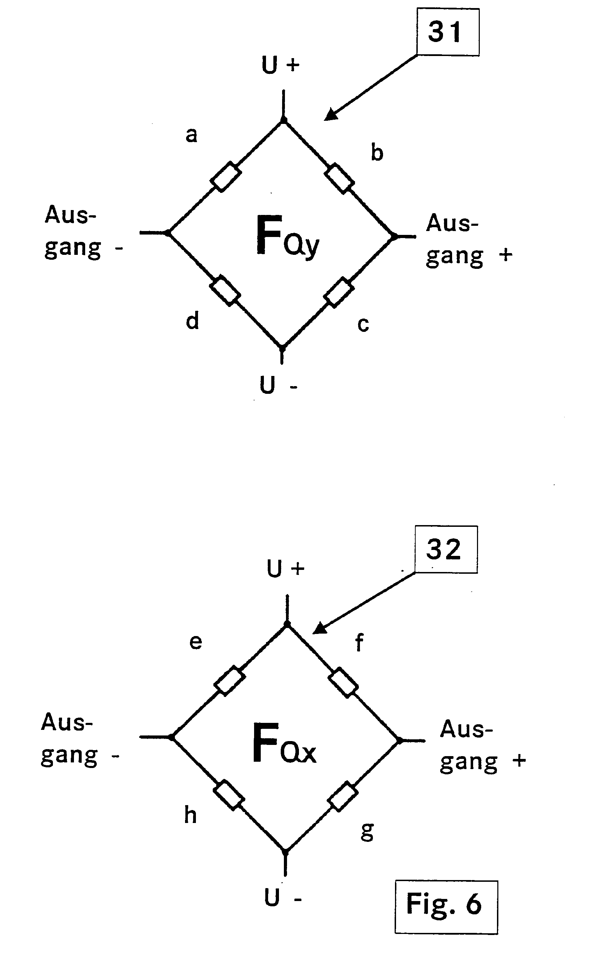

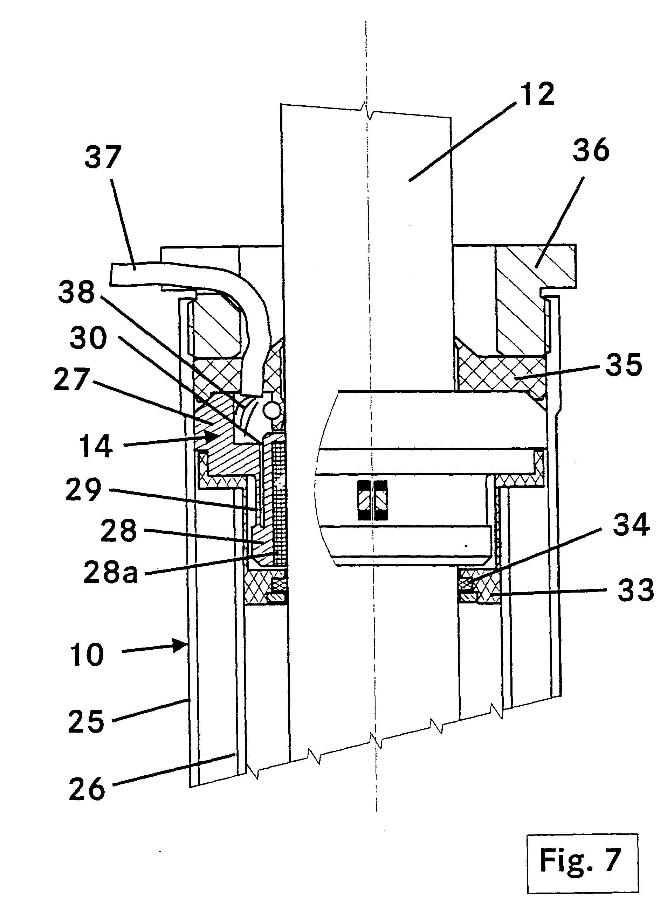

Zur Messung der Querkraft der Kolbenstange 12 wird das in den Figuren 4 bis 7 dargestellte Meßglied 14 eingesetzt.

Das Meßglied 14 wird in das freie, zweite Ende des Dämpferrohrs 10 eingesetzt. Das Dämpferrohr 10 weist in dem dargestellten Beispiel ein Außenrohr 25 und ein Innenrohr 26 auf, das in dem Außenrohr 25 angeordnet ist und zu diesem koaxial verläuft.

Das Meßglied 14 ist aus einem massiven Außenring 27, der im Außenrohr 25 des Dämpferrohrs 10 zentrisch befestigt ist, und einem zum Außenring 27 konzentrisch angeordneten Innenring 28 gebildet, in den eine Gleitführung 28a eingepreßt ist, die von der Kolbenstange 12 durchlaufen wird und an deren Außenfläche anliegt. Innenring 28 und Außenring 27 sind über ein kurzes dünnwandiges zylindrisches Rohr 29 bzw. über einen kurzen dünnwandigen zylindrischen Wandabschnitt miteinander verbunden, das bzw. der den eigentlichen Meßkörper bildet. Auf der radial innenliegenden Seite dieses Wandabschnitts 29 erstreckt sich in einem vorgegebenen Abstand der Innenring 28 in Axialrichtung und bildet so mit dem Wandabschnitt 29 einen in Umfangsrichtung umlaufenden Schlitz 30.

Die Querkraft der Kolbenstange 12 stützt sich über die Gleitführung 28a am Innenring 28 des Meßglieds 14 ab. Dadurch verschiebt sich der Innenring 28 gegenüber dem Außenring 27, wobei sich der dünnwandige zylindrische Wandabschnitt 29 quer zur Längsachse der Kolbenstange 12 verformt.

Auf der Außenwandung des dünnwandigen zylindrischen Wandabschnitts 29 sind vier Paar Dehnungsmeßstreifen a, b; c, d; e, f; g, h in Umfangsrichtung um 90° zueinander versetzt angeordnet, die auf die Verformung des dünnwandigen zylindrischen Wandabschnitts 29 ansprechen. Die Dehnungsmeßstreifen sind jeweils parallel zur Kraftkomponente angeordnet. Jeweils die einander diametral gegenüberliegenden Dehnungsmeßstreifen a, b; c, d und e, f; g, h sind zu einer Brückenschaltung 31, 32 zusammengeschaltet. Diese Brückenschaltungen 31, 32 erzeugen Signale proportional zur eingeleiteten Kraft. Quer zur jeweiligen Kraftrichtung erzeugen sie kein Signal, da sich solche Signale der einzelnen Dehnungsmeßstreifen in der Brückenschaltung 31, 32 aufheben. Die auftretende gesamte Querkraft F_{Q} wird als zwei senkrecht zueinander stehende Kraftkomponenten F_{Qx}, F_{Qy} erfaßt.

Das Meßglied 14 wird im Dämpferrohr 10 nach unten durch eine Hülse 33 mit einer Hochdruckdichtung 34 und nach oben durch eine Niederdruckdichtung 35 bzw. einen Schmutzabstreifer eingeschlossen.

Die Niederdruckdichtung 35 ihrerseits wird durch einen Druckring 36 gehalten. Der Druckring 36 und die Niederdruckdichtung 35 werden von einem Kabelschlauch 37 durchlaufen, durch den hindurch die Anschlußkabel 38 der Dehnungsmeßstreifen verlaufen.

Durch die erfindungsgemäßen Maßnahmen wird ein Feintuning an der Zielkonfiguration durchgeführt und werden die Querkräfte gezielt reduziert. Dadurch ist die Reibung in vertikaler Einund Ausfederrichtung minimal, zumindest um den beabsichtigten Betriebspunkt. Ebenso ist das Reibmoment beim Lenken minimal. Dies ist von besonderer Bedeutung beim Einschlagen der Räder (Anlenken) und in entgegengesetzter Richtung zum Rücklauf der Räder in Geradeausstellung (Lenkungsrückstellung).

## Patentansprüche

1. Verfahren zur Optimierung der Federkennlinie einer Federdämpfereinheit (1) für eine Kraftfahrzeug-Radaufhängung, wobei die Federdämpfereinheit (1) eine Tragfeder (9) und einen diese durchlaufenden Teleskop-Stoßdämpfer (8) aufweist und letzterer seinerseits ein Dämpferrohr (10), dessen erstes Ende mit dem Rad (4) verbindbar ist, einen in dem Dämpferrohr (10) hin- und herbewegbaren Dämpferkolben (11) sowie eine Kolbenstange (12) aufweist, deren erstes Ende am Dämpferkolben (11) befestigt ist und die im Dämpferrohr (10) durch ein Kolbenstangenführungselement (14) geführt ist, sich aus dem zweiten Ende des Dämpferrohrs (10) heraus erstreckt und die an ihrem zweiten Ende mit dem Fahrzeugaufbau (6) gelenkig verbindbar ist, wobei ein Ende der Tragfeder (9) am Dämpferrohr (10) und deren anderes Ende nahe dem zweiten Ende der Kolbenstange (12) unverschieblich befestigt ist, mit den folgenden Schritten:
a) Einbauen der Federdämpfereinheit (1) in eine Fahrzeugachse (2);
b) Einfedern des Rades (4) und dabei Messen der auf das Kolbenstangenführungselement (14) wirkenden Querkraft F_{Q,Einbau,ist} und des zugehörigen Dämpfereinschubweges s_{D,Einbau,ist} und Erstellen einer entsprechenden F_{Q/}s_{D}-Federkennlinie_{Einbau,ist};
c) falls die F_{Q/}s_{D}-Federkennlinie_{Einbau,ist} von einer F_{Q/}s_{D}-Federkennlinie_{Einbau,soll} um ein vorgegebenes Maß abweicht, Ausbauen der Tragfeder (9) aus der Federdämpfereinheit (1);
d) Anordnen der Tragfeder (9) in einer Federprüfmaschine (18) derart, daß die Achse der Tragfeder (9) zur Prüfmaschinenachse (19) in demselben Winkel geneigt ist wie in der Einbaulage in der Federdämpfereinheit (1) zur Kolbenstangenachse;
e) Messen des Federweges s_{D,Prüf,ist} der Tragfeder (9) in Richtung der Prüfmaschinenachse (19) und Ermitteln der zugehörigen Querkraft F_{Q,Prüf,ist} quer zur Prüfmaschinenachse (19) und Erstellen einer entsprechenden F_{Q/}s_{D}-Federkennlinie_{Prüf,ist};
f) Bestimmen einer F_{Q/}s_{D}-Federkennlinie_{Prüf, soll} durch Überlagern der F_{Q}/s_{D}-Federkennlinie_{Prüf, ist} mit der F_{Q}/s_{D}-Federkennlinie_{Einbau,ist;}
g) Herstellen einer neuen Tragfeder (9), die die neue F_{Q}/s_{D}-Federkennlinie_{Prüf, soll} aufweist;
h) Wiederholen der Schritte a) und b) und gegebenenfalls c) bis g).

2. Verfahren nach Anspruch 1,
**dadurch gekennzeichnet,**
**daß** der Schritt b) das Anordnen des Kolbenstangenführungselements (14) nahe dem zweiten Ende des Dämpferrohres (10) umfasst.

3. Verfahren nach Anspruch 1 oder 2,
**dadurch gekennzeichnet,**
**dass** die Tragfeder (9) in der Federprüfmaschine (18) so angeordnet wird, dass die Lage der Prüfmaschinenachse (19) in Bezug auf die Tragfeder (9) der Lage der Kolbenstangenachse entspricht.

4. Verfahren nach einem der Ansprüche 1 bis 3,
**dadurch gekennzeichnet,**
**daß** das Ermitteln der Querkraft F_{Q,Prüf,ist} das Ermitteln der Lage, der Richtung und des Betrags des resultierenden Kraftund Momentenvektors (20) der Tragfeder (9) umfasst.

5. Verfahren nach Anspruch 4,
**dadurch gekennzeichnet,**
**dass** der resultierende Kraft- und Momentenvektor (20) durch Messungen an einem der Enden oder an beiden Enden der Tragfeder (9) ermittelt wird.

6. Verfahren nach einem der Ansprüche 1 bis 5,
**dadurch gekennzeichnet,**
**dass** die F_{Q}/s_{D}-Federkennlinie_{Prüf,soll} bestimmt wird, indem bei einem ausgewählten Wert s_{D} die Differenz zwischen dem Wert F_{Q,Einbau,ist} und einem gewünschten Wert F_{Q,Einbau,soll} ermittelt und zu dem Wert F_{Q,Prüf,ist} addiert wird.

7. Verfahren nach einem der Ansprüche 1 bis 5,
**dadurch gekennzeichnet,**
**daß** die F_{Q/}s_{D}-Federkennlinie_{Prüf,soll} bestimmt wird, indem die F_{Q/}s_{D}-Federkennlinie_{Einbau,ist} in einem vorgegebenen s_{D}-Bereich linearisiert wird und die Differenz zu einer vorgegebenen linearen F_{Q/}s_{D}-Federkennlinie_{Einbau,soll} in diesem s_{D}-Bereich gebildet und zu der F_{Q/}s_{D}-Federkennlinie_{Prüf,ist} addiert wird.

8. Verfahren nach einem der Ansprüche 1 bis 7,
**dadurch gekennzeichnet,**
**daß** die F_{Q/}s_{D}-Federkennlinie_{Prüf,soll} so bestimmt wird, daß F_{Q,Einbau,ist} minimiert wird.

9. Meßglied zur Messung der in einer Zylinderkolbeneinheit, insbesondere in einem Teleskop-Stoßdämpfer, vorhandenen Querkraft, wobei die Zylinderkolbeneinheit ein Zylinderrohr (10; 25, 26), einen in dem Zylinderrohr (10; 25, 26) hin- und herbewegbaren Kolben (11) und eine Kolbenstange (12) aufweist, die an dem Kolben (11) befestigt ist und sich in Längsrichtung des Zylinderrohrs (10; 25, 26) erstreckt,
**dadurch gekennzeichnet,**
**daß** das Meßglied (14) als Rohrabschnitt ausgebildet ist, der von der Kolbenstange (12) durchlaufen werden kann, der in dem Zylinderrohr (10; 25, 26) befestigbar ist und der in Radialrichtung eine Innenwandung sowie eine Außenwandung aufweist, daß die Innenwandung zur vollumfänglichen gleitenden Anlage an die Kolbenstange (12) ausgebildet ist und daß die Außenwandung wenigstens einen Wandungsabschnitt (29) aufweist, der im in das Zylinderrohr (10; 25, 26) eingesetzten Zustand von dessen Innenwandung mit Abstand angeordnet ist und auf dem Meßelemente (a, b; c, d; e, f; g, h) zur Messung der Querkraft angebracht sind.

10. Meßglied nach Anspruch 9,
**dadurch gekennzeichnet,**
**daß** die Meßelemente Dehnungsmeßstreifen (a, b; c, d; e, f; g, h) sind.

11. Meßglied nach Anspruch 9 oder 10,
**dadurch gekennzeichnet,**
**daß** auf der Innenwandung des Rohrabschnitts Gleitmaterial (28a) angebracht ist.

12. Meßglied nach einem der Ansprüche 9 bis 11,
**dadurch gekennzeichnet,**
**daß** der Rohrabschnitt zwischen seiner Innenwandung und seiner Außenwandung einen in Umfangsrichtung vollständig umlaufenden Schlitz (30) aufweist, der sich in Längsrichtung von einem Ende des Rohrabschnitts aus über die Messelemente (a, b; c, d; e, f; g, h) hinaus bis zu einem vorgegebenen Abstand vom anderen Ende des Rohrabschnitts erstreckt.

13. Meßglied nach einem der Ansprüche 9 bis 12,
**dadurch gekennzeichnet,**
**daß** der Rohrabschnitt mit einem Befestigungselement am Zylinderrohr befestigt ist, wobei das Befestigungselement sich von einem Ende des Rohrabschnitts aus erstreckt.

14. Meßglied nach einem der Ansprüche 9 bis 13,
**dadurch gekennzeichnet,**
**daß** es je Meßrichtung zwei Meßelemente aufweist, die am Umfang versetzt zueinander angeordnet sind.

15. Meßglied nach einem der Ansprüche 9 bis 14,
**dadurch gekennzeichnet,**
**daß** es einen Außenring (27), der im Zylinderrohr (10; 25, 26) koaxial zur Zylinderachse befestigbar ist, einen Innenring (28), der zum Außenring (27) konzentrisch angeordnet und zur gleitenden Anlage an die Kolbenstange (12) ausgebildet ist, sowie einen dünnwandigen zylindrischen Wandabschnitt (29) aufweist, der in Längsrichtung des Zylinderrohrs (10; 25, 26) zwischen Außenring (27) und Innenring (28) angeordnet ist und diese miteinander verbindet und auf dessen radialer Außenwandung die Meßelemente (a, b; c, d; e, f; g, h) angebracht sind.
